# EUROPÄISCHE PATENTSCHRIFT

(11) **EP 1 723 210 B1**
(45) Veröffentlichungstag und Bekanntmachung des Hinweises auf die Patenterteilung: **13.08.2008**
(21) Anmeldenummer: 05740019.4
(22) Anmeldetag: 04.03.2005
(51) Int. Cl.: C09J 7/02, C09J 7/04, B32B 27/02, B32B 5/24, B32B 5/26

(54) **HOCH ABRIEBFESTES BAND FÜR DIE BANDAGIERUNG VON KABELBÄUMEN IN AUTOMOBILEN**
HIGHLY ABRASIONPROOF STRIP FOR ARMOURING CABLE HARNESSES IN MOTORCARS
BANDE TRES RESISTANTE A L'USURE UTILISEE POUR FORMER UNE ARMATURE DE FAISCEAUX DE CABLES DANS DES AUTOMOBILES

(30) Priorität: 04.03.2004 DE 102004011223
(43) Veröffentlichungstag der Anmeldung: 22.11.2006
(73) Patentinhaber: tesa AG, 20253 Hamburg (DE)
(72) Erfinder: KÜLPER, Klaus, 25421 Pinneberg (DE); VON SAMSON-HIMMELSTJERNA, Matthias, 24558 Henstedt-Ulzburg (DE); WAHLERS-SCHMIDLIN Andreas, 21720 Guderhandviertel (DE)
(86) Internationale Anmeldenummer: PCT/EP2005/002275
(87) Internationale Veröffentlichungsnummer: WO 2005/085379

(56) Entgegenhaltungen:
- EP-A- 0 716 136
- EP-A- 0 716 137
- EP-A- 1 258 346
- DE-A- 19 910 730
- DE-A1- 4 442 507
- DE-A1- 10 107 569
- DE-U- 29 823 462
- DE-U1- 20 121 254
- DE-U1- 29 510 907
- US-A- 4 122 223
- [Online] Gefunden im Internet: URL:http://de.wikipedia.org/wiki/Gewebe_%2 8Textil%29> [gefunden am 2007-11-22]

## Beschreibung

Die Erfindung bezieht sich auf ein hoch abriebfestes Band, das insbesondere für die Bandagierung von Kabelbäumen in Automobilen Verwendung finden kann.

In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich Schutzfunktionen zu erzielen. Mit Folienklebebändern wird ein gewisser Schutz vor Flüssigkeitszutritt erreicht, mit luftigen und voluminösen Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt.

Besonders die Schutzfunktion gegenüber Scheuern, Reiben, Schleifen an scharfen Kanten und Graten etc., hier zusammengefasst unter dem Begriff der Abriebfestigkeit, nimmt an Bedeutung zu. Die durch Produktionsprozesse bedingten scharfen Kanten, Grate, Schweißstellen etc. werden immer weniger durch aufwendige Nacharbeit entschärft, da dieses einen zusätzlichen Arbeitsgang und Mehrkosten bedeutet. Dies gilt insbesondere bei den Rohkarossen in der Automobilindustrie, aber auch in anderen Bereichen wie zum Beispiel bei Waschmaschinen, vibrierenden Maschinen wie Kompressoren und dergleichen. Kabelstränge, die in solchen Bereichen verlaufen und die durch Vibration, Relativbewegungen und ähnlichem an derartigen, scharfen Stellen scheuern, sind daher potenziell gefährdet, dass die Schutzhülle zerstört wird. Diese Schutzhülle kann die zusätzliche Wickelbandage sein, aber auch die Isolierung um das Kupferkabel selber. In diesem Falle wäre ein Kurzschluss mit vollständigem Funktionsausfall und Zerstörung von elektrischen/elektronischen Bauteilen bis hin zum Brandereignis die Folge mit den daraus resultierenden Risiken an Sach- und Personenschäden.

Um derartige Gefährdungspotenziale zu minimieren, werden an kritischen Stellen die Kabelstränge nicht nur mit normalen Wickelbändern bandagiert, sondern es wird zusätzliche Vorsorge getroffen. Entweder werden Spezialklebebänder verwendet oder aber es kommen besondere Schutzkomponenten zum Einsatz. Dies können beispielsweise Kabelkanäle aus verschleißfesten Polymeren wie Polyamid oder Rillrohre oder Geflechtschläuche aus Polyester oder Polyamid sein, alles Komponenten, die in Hinblick auf Kosten, gesonderte Logistik und die aufwendige Handhabung bei der Montage ungünstig sind. Bei der Montage von Rillrohren und Kabelkanälen muss beispielsweise erheblicher Aufwand für die Anbringung der länglichen Rohrsysteme und ihre sichere Fixierung auf dem Kabelbündel beziehungsweise an der Karosse betrieben werden, um ein Verrutschen zu verhindern. Auch sind gegebenenfalls gesonderte Maßnahmen notwendig für den Klapperschutz, da die Leitungen in den Rohrsystemen selten formschlüssig anliegen und deshalb mit den harten Materialien der Rohre bei Vibrationen Klappergeräusche erzeugen.

Auch Spezialklebebänder werden in Bereichen mit erhöhtem Abrieb- und Scheuerschutz eingesetzt. Klebebänder für die Wickelung von Kabelsätzen oder ähnlichen langgestreckten Systemen mit zusätzlichen Funktionalitäten sind als Stand der Technik bekannt und werden teilweise auch kommerziell genutzt:

In EP 1 136 535 A1 wird unter anderem ein mehrschichtiges Klebeband mit schalldämpfender Wirkung, bestehend aus einem Velours und einer nicht-textilen Zwischenlage, beschrieben, wobei diese Zwischenlage eine Folie oder eine direkt aufgebrachte, nichtklebende Kunststoff- oder Schaumbeschichtung sein kann. Diese Zwischenschicht dient der Stabilisierung des Velours gegen Verzug und als Sperrschicht, um ein Eindringen der aufgerakelten Klebemasse in den Veloursträger zu verhindern. Der angestrebte Abriebschutz ist bei einem derartigen Klebeband gering und wird allein durch die Veloursdeckschicht und den nach außen weisenden Veloursschlingen erreicht.

Nur zur Schallisolierung dient das in DE 199 10 730 A1 beschriebene Klebeband aus einem Laminat, einer Schallisolationsschicht (Velours oder Schaumstoff) und einem Vlies, das unter Verwendung von Schmelzkleber, -pulver oder einem Transfer-Fix hergestellt wird. Auf die Verwendung des sehr teuren Veloursträgers aus dem Polymerwerkstoffen Polyester oder Polyamid wird auch in anderen Anmeldungen zurückgegriffen, die Klebebänder mit ausgeprägter Klapperschutzfunktion beschreiben (DE 299 00 294 U1, DE 299 16 616 U1 sowie DE 101 02 927 A1). In allen Fällen werden hochpreisige Klebebänder erhalten, die in Hinblick auf den Abriebschutz keine sehr hohen Anforderungen erfüllen.

Einen ähnlichen Aufbau wie EP 1 136 535 A1 weist DE 101 49 975 A1 auf. Hier wird ein Klebeband zum Schutz von Gegenständen gegen Abrieb und Klappern beschrieben, das einen Zweischichtaufbau aus einer textilen Schicht und einer aufkalandrierten Folie aufweist. Gewebe oder Vlies als textile Schicht und insbesondere PVC-Folien werden hier ohne Einsatz von Klebern durch Kalandern unter Druck und Temperatur fest und dauerhaft miteinander verbunden. Die textile Schicht ist dem zu schützenden Gegenstand abgewandt angeordnet.

WO 00/13894 A1 beschreibt eine Scheuerschutzvorrichtung als Kantenschutz für scharfkantige Bauteile wie Stahlblechkarosseriegrate, wobei der Scheuerschutz an derartigen Stellen umgreifend aufgeklebt wird. Der Scheuerschutz besteht aus einer textilen Trägerschicht (beispielsweise aus Velours oder einem Nadelvlies) und einer scheuerstellenseitig aufgebrachten Schutzfolie, bevorzugt aus thermoplastischem Polyurethanpolymer, sowie einer bauteilseitig aufgebrachten Klebschicht mit einer Trennpapierabdeckung. Textile Trägerschicht und Schutzfolie sind über eine dünne Verklebung miteinander verbunden, wobei der Klebstoff nur teilbereichsweise in Form eines wärmeaktivierbaren Klebevlieses, -pulvers oder -films aufgebracht wird. Dieser aufwändige Verbund wird mit Trennpapier abgedeckt, in geeigneten Zuschnitten eingesetzt und ist deshalb für die generelle Schutzumwicklung von Kabelbäumen ungeeignet. Mit der erfindungsgemäßen Schutzvorrichtung wird nicht der Kabelbaum aktiv geschützt, sondern bei Bedarf scharfkantige Teile der Umgebung lokal abgedeckt als eine Art passiver Kabelsatzschutz.

DE 100 42 732 A1 beschreibt ein Klebeband für die spiralförmige Umwicklung langgestreckter Güter wie beispielsweise Kabelsätze, wobei durch eine nicht vollflächige Streifenbeschichtung auf dem bevorzugt textilem Träger eine verringerte Haftung des Wickelbandes zu den Leitungen und damit eine verbesserte Beweglichkeit und Biegefähigkeit des gesamten Kabelsatzes erreicht wird. Derartige erfindungsgemäße Klebebänder bieten jedoch keinen besonderen Abriebschutz, sondern dienen allein der Flexibilisierung des Kabelsatzes.

Ein Klebeband mit einer Eigenschaftskombination aus Schallminderung und Schutz vor Reibbeanspruchungen wird in DE 101 13 425 A1 beschrieben. Auch bei der geforderten Flächenmasse des Vliesträgers mit vertikalen Polfalten von mehr als 200 g/m² werden nur Schutzwirkungen im mittleren Bereich für Dämpfung und insbesondere gegen Abrieb erhalten, wie es auch schon aus der EP 0 995 782 A1 sowie EP 0 995 783 A1 bekannt war. Ähnlich verhält es sich auch für DE 100 39 983 A1, wo in einer speziellen Ausführungsform ein textiler Verbund aus einem scheuerbeständigen Vlies und einem textilen Flächengebilde beschrieben wird, der ohne Verwendung eines Kaschierklebers oder ähnlichem nur durch Wasserstrahlverfestigung hergestellt wird. Während das textile Flächengebilde zusätzliche dämpfende oder armierende Eigenschaften in den Verbund einbringt, sind die Abriebfestigkeiten für das scheuerbeständige wasserstrahlverfestigten Grundvlies aus Stapelfasern bei einer Flächenmasse von maximal 200 g/m² eher als gering anzusehen. Nähere Belege und insbesondere konkrete Angaben zu Scheuerfestigkeiten fehlen bei allen oben genannten Schutzrechten.

Neben dem in der genannten Schrift erwähnten Nähvlies gibt es weitere Träger, die in Klebebändern zur Kabelbaumbandagierung eingesetzt werden.
Die DE 44 42 092 C1 beschreibt solch ein Klebeband auf Nähvliesbasis, das auf der Trägerrückseite beschichtet ist. Der DE 44 42 093 C1 liegt die Verwendung eines Vlieses als Träger für ein Klebeband zugrunde, das durch die Bildung von Maschen aus den Fasern des Vlieses verstärktes Querfaservlies entsteht, also ein dem Fachmann unter dem Namen Malivlies bekanntes Vlies. Die DE 44 42 507 C1 offenbart ein Klebeband zur Kabelbandagierung, jedoch basiert es auf so genannten Kunit- beziehungsweise Multiknitvliesen.

Ebenfalls ein mehrschichtiger Trägerverbund wird in EP 1 063 747 A1 beschrieben, um daraus eine Schutzummantelung für langgestreckte Gegenstände mit guter Abriebfestigkeit und Geräuschdämmung zu bilden. Erfindungsgemäß sind für den Verbundträger mindestens zwei Vliesstoffe zu nehmen, die locker, meist nur teilbereichsweise, miteinander verbunden sind und sich gegeneinander bewegen können. Gewebe, Gewirke und ähnliche textile Träger werden explizit als ungeeignet ausgeschlossen. Unklar bleibt auch das Ausmaß der Abriebfestigkeit und der Geräuschdämmung von erfindungsgemäßen Mehrschichtsystemen, da keinerlei konkrete, gemessene Daten mitgeteilt werden.

Einen extrem komplizierten und kostenträchtigen vielschichtigen Verbund offenbaren EP 0 886 357 A1 und EP 0 886 358 A1. Hier werden ein PET-Spinnvlies, ein PET-Gewirke sowie gegebenenfalls eine Filz- oder Schaumstofflage mit jeweils einer Kaschierschicht verklebt. Dieser an sich schon aufwändige Verbund aus bis zu fünf Lagen wird zusätzlich noch partiell mit den beiden notwendigen Komponenten eines Klettsystems und ein oder mehreren durch Schutzpapier abgedeckten Selbstklebestreifen versehen. Unter wirtschaftlichen Gesichtspunkten sind derartige Systeme mit hoher Abriebschutzfunktion nur an wenigen, ausgewählten Stellen, aber nicht als allgemeine Wickelbänder für Kabelsätze oder andere längsgestreckte Gegenstände vertretbar.

Ähnlich aufwändig wird als Schutzummantelung zum Eindämmen von Klappergeräuschen für Leitungssysteme in DE 298 23 462 U1 ein Wickelband mit einem Trägerverbund aus mindestens zwei textilen Schichten beschrieben, das zusätzlich eine hohe Abrieb- und Aufreibfestigkeit aufweisen soll. Die äußere Schicht besteht aus einem Kettenwirkwaren-Velours mit hochgerauten Veloursschlingen, das teilbereichsweise mittels eines wärmeaktivierbaren Kaschierklebers bei einem Auftragsgewicht von 10 bis 30 g/m² mit einem Vlies, vorzugsweise einem Nadelvlies, verbunden ist. Mit ca. 1,5 bis 4 mm trägt die Ummantelung für viele Automobilanwendungen zu stark auf und kann an Engstellen deshalb nicht eingesetzt werden.

Zusammenfassend kann konstatiert werden, dass eine Vielzahl von Lösungsansätzen bekannt ist, bei denen bevorzugt das sehr kostspielige textile Trägermaterial Velours im Verbund mit mindestens einem weiteren textilen oder nicht-textilen Flächengebilde für den besonderen Abrieb- und/oder Klapperschutz zuständig ist (detailliert beschrieben in DE 298 23 462 U1). Der Trägerverbund wird entweder ohne Klebeschicht oder aber durch einen besonderen wärmeaktivierbaren Kaschierkleber, häufig in nur teilbereichsweiser Verwendung, erzeugt. Selbstklebemassen dienen nur dazu, um als separate Schicht aus diesem Trägerverbund ein Klebeband herzustellen. Derartige Klebebänder sind durch die Verwendung des Wirkwaren-Velours nicht nur sehr teuer, sondern durch die Schlingenstruktur so dick, dass derartige Spezialwickelbänder bei der normalen überlappenden Spiralwicklung oder bei der Längsummantelung wegen den zur Verfügung stehenden knappen Verbauräumen nicht eingesetzt werden können.

Aufgabe der Erfindung ist es, gegenüber dem Stand der Technik eine merkliche Verbesserung zu erzielen und ein Band bereitzustellen, welches die Möglichkeit zur Bandagierung von Einzelleitungen zu Kabelsätzen mit hohem Schutz gegen mechanische Schädigungen durch Scheuern und Reiben an scharfen Kanten, Graten, Schweißpunkten etc. kombiniert. Dieses Band vorzugsweise Klebeband soll sowohl für die Standardwickeltechniken mit überlappender oder offener Spiralwicklung um das Leitungsbündel geeignet sein als auch für die Längsapplikation mittels Applikatoren, wie sie beispielsweise in der EP 1 008 152 A1 beschrieben werden, oder in Form von speziellen Konfektioniervarianten, insbesondere gemäß DE 100 36 805 A1. Auch in der Sonderform mit nur streifenförmiger Kleberbeschichtung in Längsrichtung an den Rändern des Trägermaterial gemäß DE 100 42 732 A1 soll das erfindungsgemäße Trägermaterial zu neuartigen, hoch abriebfesten Kabelwickelbändern führen, die Bandagierungs- und Abriebschutzfunktion in dem bevorzugten Klebeband vereinigen.

Als Methode, die Abriebbeständigkeit von Schutzsystemen in der Fahrzeugelektrik zu bestimmen, hat sich die internationale Norm ISO 6722, Kapitel 9.3 "Scrape abrasion test" (Ausgabe April 2002), etabliert. Hier wird der Prüfling (zum Beispiel die isolierte Kupferleitung oder aber das auf einen Metalldorn geklebte Wickelband) mit einem dünnen Stahldraht unter definierten Hubgeometrien und Gewichtsbelastung beansprucht, bis die Schutzhülle durchgerieben ist und es über einen Kurzschluss zum Stoppen des mitlaufenden Zählwerkes kommt.

Sofern nicht anders angegeben, beziehen sich alle Angaben zur Abriebfestigkeit auf diese ISO 6722-Methode. Das Klebeband wird dazu einlagig in Längsrichtung auf einem Metalldorn von 10 mm Durchmesser geklebt, die Scheuerbewegung findet mittig auf dem Klebeband mit einer Gewichtsbelastung von 7 N statt. Als Reibkörper wird ein Stahldraht gemäß ISO 8458-2 von 0,45 mm Durchmesser verwendet. Als Maßzahl für die Abriebfestigkeit wird die Anzahl der Hübe bis zum Kurzschluss angegeben. In Fällen von sehr hohen Scheuerbeständigkeiten kann über Erhöhung der Auflagemasse eine Verkürzung der Messzeit und Reduzierung der Hubzahl erreicht werden. Hierbei hat sich ein Auflagegewicht von 10 N als günstig erwiesen.

Demgemäß betrifft die Erfindung ein hoch abriebfestes und geräuschdämpfendes Band für die Bandagierung von Kabelbäumen, insbesondere in Automobilen, aus einem Träger mit einer ersten Deckschicht A, die mit einer zweiten Schicht C über die gesamte Fläche der Deckschicht A fest verbunden ist, die Deckschicht A aus einem Gelege oder Gewebe, insbesondere einem PET-Filamentgewebe oder einem Polyamid-Gewebe besteht und die Schicht C aus einem Textil mit einer offenen, aber stabilen dreidimensionalen. Struktur besteht wobei es sich bei der Schicht C um ein Abstandsgewirke, eine Schlingenware, ein dreidimensionales Vliesstoffgebilde aus Kunit, Multiknit oder Maliknit oder Caliweb® oder ein Kettengewirke handelt und die Schicht C ein Flächengewicht von 150 bis 500 g/m² aufweist.

In einer ersten vorteilhaften Ausführungsform der Erfindung ist die Schicht C auf der offenen Seite mit einer zweiten Deckschicht B über die gesamte Fläche der Deckschicht B fest verbunden, wobei die Deckschicht B vorzugsweise aus einem Gelege; Gewebe oder Gewirke, insbesondere einem PET-Filamentgewebe oder einem Polyamid-Gewebe besteht.

Überraschenderweise zeigt sich, dass bei erfindungsgemäßer Herstellung eines mehrlagigen Systems die Abriebfestigkeit des Gesamtverbundes deutlich höher ausfällt als die Summe aus den Abriebfestigkeiten der Einzellagen, wodurch eine erhebliche Steigerung der Schutzwirkung gegen reibende und scheuernde Einwirkungen erzielt werden kann, ohne gesonderte Schutzmaßnahmen ergreifen zu müssen. Bei erfindungsgemäßem Aufbau des Bandes ist es möglich, eine Kombination aus den Bandagiermöglichkeiten eines normalen Wickelbandes mit dem Abriebschutz von Sondersystemen wie TwistTubes^{®}, Geflechtschläuche, Wellrohren und ähnlichem herzustellen. Hierzu ist es notwendig, dass ein Verbundaufbau für das Trägermaterial gewählt wird, wie er im Folgenden beschrieben ist, wobei die genannten Ausführungen nur als beispielhaft anzusehen sind.

Vorzugsweise beträgt die Abriebfestigkeit des Trägers (gemessen nach ISO 6722, Kapitel 9.3 "Scrape abrasion resistance") zumindest 150 % der Summe der Abriebfestigkeiten der Einzellagen.

Es handelt sich um ein mehrlagiges System aus ein oder zwei gleichen oder unterschiedlichen Deckschichten A und/oder B, die per se eine günstige Abriebfestigkeit aufweisen wie zum Beispiel Folien, Vliesstoffe, Gewirke, Gewebe, Velours etc. und die aus entsprechenden Werkstoffen bestehen, und zumindest einer Schicht C, die zum einen für den dauerhaften stabilen Verbund zwischen den Deckschichten A und gegebenenfalls B sorgt, aber auch derart gestaltet ist, dass sie Kräfte und Energien, die bei Reib- und Scheuerbewegungen auftreten, aufnehmen und "vernichten" kann. Diese spezielle-Energievernichtung kann ein Weiterleiten der mechanischen Energie an andere Teile in dem Band oder dessen Umgebung oder aber die zumindest teilweise Umwandlung in Wärme oder ähnlichem bedeuten. Damit wird verhindert, dass die ursprüngliche, mechanische Energie die Deckschicht(en) zerstört, indem sie in andere Energieformen umgewandelt oder aber an Stellen des Bandes weitergeleitet wird, an denen sie keine oder zumindest geringere Schädigungen anrichtet als unmittelbar an den Deckschichten. Damit wird die Funktionsfähigkeit des Bandes als Wickelband und Schutzhülle verlängert, so dass in vielen Fällen auf zusätzliche, kosten- und arbeitsintensive Schutzsysteme verzichtet werden kann.

Im Stand der Technik werden vielfach auch mehrlagige Verbundsysteme genutzt, bei denen aber gegebenenfalls vorhandene Zwischenschichten nicht die oben genannte Funktionalität aufweisen. Es handelt sich bei den Zwischenschichten vielfach um typische Kaschier- und Laminierkleber für die Aufgabe, eine feste Verbindung bei mehrlagigen Systemen herzustellen, oder um Hilfslagen für die Deckschicht, um diese beispielsweise gegen Verzug bei der Beschichtung zu stabilisieren oder aber die Beschichtung mit flüssigen, penetrierenden Klebstoffen überhaupt möglich zu machen, wenn die Deckschicht selbst zu saugfähig oder durchlässig ist.

Geeignet als erfindungsgemäße Schicht C, die die Abriebfestigkeit des Verbundsystems signifikant erhöht, und damit als vorteilhaft erkannt sind Textilien wie beispielsweise Abstandsgewirke, Schlingenware, dreidimensionale Vliesstoffgebilde aus Kunit, Multiknit oder Maliknit oder Caliweb® und ähnliche, sofern sie es erlauben, dem Zwang, der durch die Reibung oder das Scheuern auf die Decklage ausgeübt wird, durch mikroskopische oder makroskopische Bewegungen in der Zwischenlage auszuweichen. Dadurch wird erreicht, dass die an sich zerstörerische Energie nicht zielgerichtet lokal auf die Decklage wirkt und daher stark verminderte Schädigungen erzeugt.

Bei den erfindungsgemäß geeigneten Textilien für die Zwischenschicht C sind häufig die Fasern, Filamente oder Garne nicht zweidimensional flächig in der Trägermaterialebene gelegt, sondern weisen eine ausgeprägte Ausrichtung in der dritten Dimension, der Schichtdicke, auf: Dies kann beispielsweise durch Faltenbildung von Faserbüscheln wie bei dem Multiknit erreicht werden oder dadurch, dass Filamente oder Garne stabile und dauerhafte Schlaufen in Dickenrichtung aufweisen. Als Beispiel für ein derartiges Textil mag das Caliweb^{®} dienen. Das Caliweb^{®} besteht aus einem thermisch fixierten Abstandsvliesstoff Multiknit mit zwei außenliegenden Maschenschichten und einer innenliegenden Polschicht, die senkrecht zu den Maschenschichten angeordnet sind.

Geeignete textile Schichten C weisen ein Flächengewicht von 150 bis 500 g/m² auf, wobei für eine gute Kombination aus Abriebfestigkeit und Dämpfung weitere bevorzugt auf Textilien mit einer Flächenmasse von 150 bis 300 g/m² zurückgegriffen wird.

Deckschichten A und gegebenenfalls B und Schicht C müssen einen stabilen, belastbaren . Verbund bilden, der gemäß Stand der Technik zum einen über die Verwendung von bekannten wärmeaktivierbaren oder selbstklebenden Laminierklebern erreicht werden kann oder ohne jegliche Verwendung von Laminierklebern durch geschickte mechanische Verbindungsbildung. So können bei der Herstellung von einem Multiknit aus der Vorstufe des Kunits bei der Vermaschung von Fasermaterial aus den Polfalten fertige textile Flächengebilde wie Gewebe, Vliesstoffe oder Gewirke zugeführt und zu einem mehrlagigen Schichtsystem verbunden werden.

Durch geeignete Prozessführung wird der fertige textile Träger, beispielsweise ein PET-Gewebe, in die Oberfläche des Multiknit-Materials "eingenäht", das heißt fest und dauerhaft mechanisch verbunden, so dass ein stabiler Verbund aus einer textilen Deckschicht und dem Multiknit als Schicht C entsteht. Neben der Nähwirktechnik wie beim Multiknit sind auch andere Vliestechnologien in der Lage, derartige flächige Verbunde herzustellen, beispielsweise bei Einsatz der Vernadelungs- oder der Wasserstrahltechnologie. Die textile Deckschicht eines derartigen Verbundes stellt hierbei den Angriffspunkt für die reibende oder scheuernde Belastung dar. Die textile Zwischenschicht übernimmt einen Teil der Energie oder aber erlaubt der Deckschicht der Reibbelastung durch mikro- oder makroskopischen Bewegungen auszuweichen. Gesamthaft wird durch derartige Trägerkonstruktionen eine gegenüber den Einzelkomponenten verbesserte Abrieb- und Scheuerfestigkeit erreicht.

Ein als besonders vorteilhaft erkanntes Kennzeichen für die Schicht C, ob nun in der Ausprägung als Schaumstoff, geschäumte Folie oder Textilträger, ist ein Raumgewicht von 100 bis 600 g/dm³. Dadurch wird erreicht, dass die Schicht C eine ausreichende Menge an luftgefüllten Hohlräumen aufweist, wodurch bei geeigneter Wahl der Zwischenträgerart eine Beweglichkeit im mikroskopischen Bereich und damit die Energieweiterleitung beziehungsweise -dissipation erreicht wird.
Deutlich niedrigere Raumgewichte bergen die Gefahr von zu geringer mechanischer Festigkeit, so dass bei Scheuerbelastungen der Deckschicht auch die Schicht C irreversibel geschädigt würde; merklich höhere Raumgewichte als 600 g/dm³ dagegen reduzieren die "Pufferwirkung", da sich die Schicht C immer mehr einem homogenen Schichtkörper wie beispielsweise einer kompakten Folie annähert. Insbesondere die Eigenschaft der Geräuschdämpfung reduziert sich dann.
Als besonders geeignet erwiesen sich Zwischenschichten mit einem Raumgewicht von 150 bis 350 g/dm³.

Ohne diese Angaben als scharfe Ausschlussgrenze anzusehen, sollte die Schicht C eine Dicke von 0,2 bis 3 mm aufweisen, wobei in Hinblick auf die Obergrenze für die Gesamtdicke eines Bandes für Bandagierungsanwendungen von langgestreckten Gütern wie beispielsweise Kabelsträngen, die im Normalfall etwa bei 1 bis 1,5 mm liegt, sich Dicken von 0,2 bis 1,0 mm anbieten.

Derartige erfindungsgemäße Trägerverbunde zeichnen sich nicht nur durch sehr hohe Abrieb- und Scheuerfestigkeiten aus, sondern weisen auch ausgeprägte bis herausragende Geräuschdämpfungseigenschaften auf, so dass sie je nach Einsatzgebiet nicht nur als Schutzsystem gegen mechanische Belastungen verwendet werden können, sondern auch als Klapperschutzband. Gerade bei Kabelbäumen in Maschinen oder Automobilen ist vielfach die Notwendigkeit von Abriebschutz unmittelbar mit Klapperschutzanforderungen kombiniert. Ein beweglicher Kabelstrang kann zum einen an scharfen Kanten und Graten scheuern, aber auch bei Vibrationen und Gegenschlagen Klappergeräusche erzeugen. Sind dann die für die Kabelbandagierung verwendeten Wickelbänder in der Lage, das Auftreten von Schallereignissen aktiv zu unterdrücken oder zu reduzieren, kann auf zusätzliche kostenträchtige geräuschdämpfende Maßnahmen verzichtet werden.

Die physikalische Messung der Geräuschdämpfungswirkung erfolgt gemäß der Methode, wie sie in DE 100 39 982 A1 detailliert beschrieben wird. Es handelt sich hierbei um eine in der Automobilindustrie etablierte Messmethodik, wie sie beispielsweise auch in der BMW-Norm GS 95008-3 (Ausgabe Mai 2000) angegeben wird.

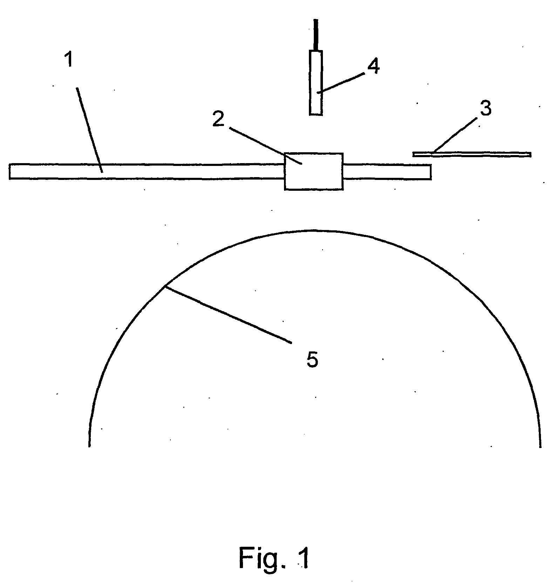

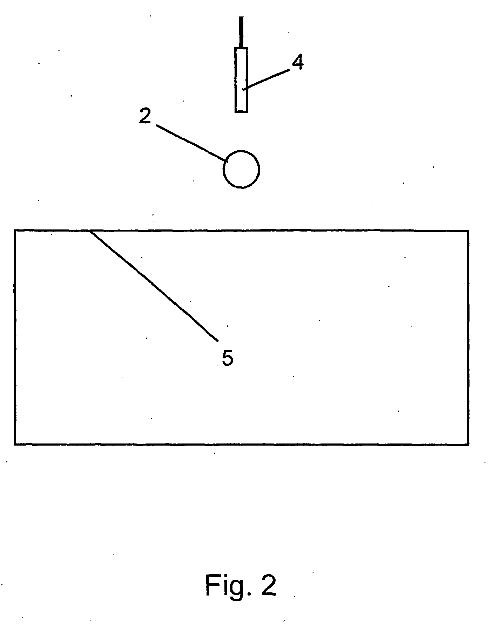

Im Folgenden wird in Verbindung mit den Figuren 1 und 2 das Messverfahren nach der BMW-Norm GS 95008-3 aus Mai 2000 ausführlich dargelegt.

Es zeigen
- Figur 1: den Aufbau der Messvorrichtung in der seitlichen Ansicht und
- Figur 2: denselben Aufbau in der horizontalen Ansicht.

Bei dieser Meßmethode wird ein definierter Stahlstab 1 mit 8 mm Durchmesser derartig mit dem Prüfling 2 - sprich Band - umwickelt, dass sich Hebellängen von 220 mm und 150 mm ergeben. Der umwickelte Stahlstab 1 wird bis zur Arretierung 3 auf die Fallhöhe und mit einem Gewicht von ca. 16 g auf ein Aluminiumblech 5 fallen gelassen. Das Aluminiumblech 5, das im unverformten Zustand 350 x 190 x 0,3 [mm] misst, wird halbtonnenförmig unter dem Prüfling 2 angeordnet, so dass sich eine Weite von 290 mm ergibt.
Das Gesamtschallergebnis wird mittels eines über der Prüfanordnung befindlichen Mikrofons 4 in einem Frequenzbereich von beispielsweise 20 bis 12.500 Hz mit einem handelsüblichen Schallmessgerät, beispielsweise Typ 2226 der Firma Bruel & Kjaer erfasst und aufgezeichnet. Für das menschliche Ohr als besonders relevant sind Frequenzen im Bereich von 2.000 bis 5.000 Hz.
Die Dämpfung wird als Differenz zwischen Nullwert mit nicht-umwickeltem Stahlstab sowie dem jeweiligen Messwert in dB(A) angegeben.

Weisen mehrlagige Trägerverbunde gemäß Stand der Technik bereits einen gewissen Schall- und Geräuschdämpfung auf, so lässt sich dieser erheblich verbessern, wenn auf Trägerverbunde zurückgegriffen wird, die in der Schicht C Textilien mit einer offenen, aber stabilen dreidimensionalen Struktur aufweisen. Als besonders geeignet haben sich dabei die bereits aufgeführten Textilien wie Stapelfaservliesstoffe, Abstandsgewirke, Schlingenware, dreidimensionale Vliesstoffgebilde aus Kunit, Multiknit, Maliknit oder Caliweb^{®} erwiesen. Darüber hinaus ergeben erfindungsgemäß auch geschäumte Folien oder Schaumstoffe aufgrund ihrer porösen Hohlraumstruktur einen hohen aktiven Klapperschutz.

Erfindungsgemäße Träger weisen Geräuschdämpfungen nach der oben genannten Methode von mindestens 10 dB(A), insbesondere von mindestens 15 dB(A), auf.

Die vollflächige Verbindung der Deckschichten A und gegebenenfalls B mit der Schicht C kann durch Verwendung eines Kaschierklebers in geringer Schichtdicke wie auch durch "Verzahnung" wie beispielsweise durch Übernähen oder Vernadeln vonstatten gehen. Das Vernähen kann bei geeigneter Kombination der Deck- und Zwischenlagen selbst ein Teil des Trägerherstellprozesses sein, so dass kostenträchtige zusätzliche Prozessschritte entfallen können.
Wird als Zwischenlage ein Kunitvlies gewählt, welches durch seine Polfalten bereits die erfindungsgemäßen Eigenschaften der Zwischenlage aufweist, so kann in der Mulitknit-Maschine durch Zuführen der Decklage A durch geeignete Vermaschung mit dem Kunitvlies eine ausreichende Verbundfestigkeit von Decklage und Zwischenlage erreicht werden.

Als Werkstoffe für die Schichten A, B und C finden insbesondere verschleißfeste Polymere wie Polyester, Polyolefine, Polyamide oder Glas- oder Carbonfasern Verwendung.

In einer weiteren vorteilhaften Ausführungsform der Erfindung wird der Träger zumindest einseitig mit einer Selbstklebemasse beschichtet.
Die Beschichtung erfolgt dabei auf die der Deckschicht A abgewandten Seite der Schicht C beziehungsweise auf die offene Seite der Deckschicht B.

Dabei ist für den Fachmann offensichtlich, dass Zwischenschicht, Klebemasse und Beschichtungstechnologie im konkreten Fall aufeinander abgestimmt sein müssen, um beispielsweise das Wegschlagen einer fließfähigen Klebemasse und ein "Imprägnieren" des Trägerverbundes zu vermeiden.

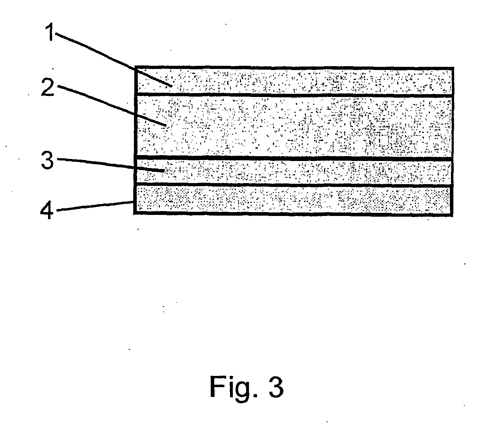

In der Figur 3 ist ein erfindungsgemäßes Klebeband dargestellt. Zwischen den Deckschichten A (1) und B (3) befindet sich die Zwischenschicht C (2). Auf der Deckschicht B (3) ist eine selbstklebende Schicht (4) aufgebracht.

Um aus dem Träger ein Selbstklebeband herzustellen, kann auf alle bekannten Klebemassensysteme zurückgegriffen werden. Neben Natur- oder Synthesekautschuk basierten Klebemassen sind auch Silikonklebemassen sowie insbesondere Polyacrylatklebemassen verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind. Die Auftragsgewichte bei der Klebemassenbeschichtung sind den jeweiligen Verbundsystemen im Hinblick auf die Rauhigkeit sowie Saugfähigkeit der zu beschichtenden Oberfläche anzupassen und bewegen sich im Bereich zwischen 40 bis 100 g/m² für glatte, nicht-saugende

Deckschichten oder aber bis 300 g/m² für offene, strukturierte Deckschichten, wobei 50 bis 150. g/m² im Normalfall als ausreichend anzusehen sind. Als Beschichtungstechnologie für derartige Trägermaterialien kommen bekannte Systeme zum Zuge, wobei sich für offene, saugfähige Textilien Verfahren anbieten, die ein druckloses Auflegen von hochviskosen Klebemassen zulassen, beispielsweise die Beschichtung von Hotmelt-Klebemassen über Düsenbeschichtung oder über Transferierung von einem anti-adhäsiven Trägertuch oder Releaseliner auf den Trägerverbund.

Ebenso ist eine selbstklebende Ausrüstung dadurch zu erreichen, indem der Trägerverbund statt mit einer selbstklebenden Beschichtung mit einem doppelseitigen Klebeband versehen wird. Je nach Art des Klebers sowie der gewünschten Verarbeitung durch den Kunden kann das Silikontrennpapier auf der äußeren Klebemasse des Klebebands bei der Kaschierung ausgedeckt werden oder es verbleibt bis zur Endanwendung als Schutz der Selbstklebeschicht gegen Verunreinigungen etc. erhalten.

Aufgrund der hervorragenden Ausgestaltung des erfindungsgemäßen Bandes, insbesondere wenn dies einseitig klebend ausgerüstet ist, lässt sich dieses zum Ummanteln von langgestrecktem Gut, wie insbesondere Kabelsätzen, wobei das Band in einer schraubenförmigen Spirale um das langgestreckte Gut geführt wird, verwenden. Alternativ wird das langgestreckte Gut in axialer Richtung von dem Band umhüllt.

Erfindungsgemäße Klebebänder können für die spiralförmige offene oder überlappende Wicklung von langgestreckten Gütern wie Kabelsätze eingesetzt werden - dazu ist die Kleberbeschichtung einseitig vollflächig oder nach DE 100 42 732 A1 streifenförmig ausgeführt. Des Weiteren lassen sich aus dem Trägerverbund auch Konstruktionen für die Längsummantelung von langgestreckten Gütern herstellen, wie sie bereits beispielsweise in DE 100 36 805 A1 beschrieben sind. Dazu werden zwei gleichartige oder unterschiedliche Klebebänder aus Trägerverbund und Klebemasse versetzt mit den Klebemassenseiten gegeneinander zusammen laminiert.

In einer anderen Ausführungsform werden zwei Klebebänder klebmassenseitig und zentriert zusammen laminiert, wobei die Ursprungsbreiten der Klebebänder jedoch unterschiedlich sind, so dass auch in diesem Falle als Endprodukt ein Klebeband mit Klebmassestreifen an beiden Rändern und einem nicht-klebenden Mittelbereich erhalten wird; im Gegensatz zu der Skizze sind in dem letztbeschriebenen Fall die Klebmassestreifen jedoch zu derselben Seite hin orientiert.

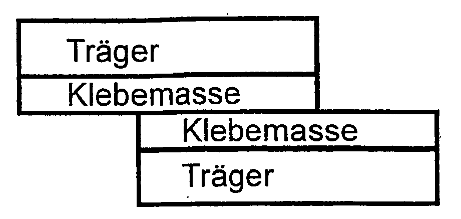

Durch geeignete Auswahl der beiden Teilkomponenten, das heißt in diesem Falle der beiden Selbstklebebänder, lässt sich das Klebeband für Längsummantelungen in weiten Bereichen variieren. Über die Art der verwendeten Trägerverbunde sind Abrieb- und Temperaturbeständigkeiten, Dämpfungseigenschaften sowie Farbe und Erscheinungsform der äußeren Decklage wählbar.

Weiterhin umfasst somit der Erfindungsgedanke auch ein langgestrecktes Gut, wie insbesondere einen Kabelbaum, ummantelt mit einem erfindungsgemäßen Klebeband sowie ein Fahrzeug, enthaltend das ummantelte langgestreckte Gut.

Als Decklagen A und gegebenenfalls B für den Träger sind grundsätzlich alle Flächengebilde möglich, die eine geeignete Scheuerfestigkeit und Oberfläche bieten, dass sie für derartige Anwendungen im Automobilbereich in Frage kommen, insbesondere Gewebe, Gewirke (nur B), Veloure (nur B), Vliesstoffe (nur B) und ähnliche textile Materialien (nur B).
Als besonders geeignet haben sich dicht gewebte Filamentgewebe aus Polyester oder Polyamid erwiesen mit einer Gewebekonstruktion von 40 bis 50 Fäden pro cm in Kettrichtung sowie 20 bis 30 Fäden pro cm in Schussrichtung. Derartige PET-Gewebe mit einem Flächengewicht von 60 bis 150 g/m² werden bereits seit längerem im Motorraum in Wickelbändern eingesetzt und weisen bekanntermaßen eine mittlere Abriebfestigkeit von ca. 1000 Hübe gemäß ISO 6722 (Dorndurchmesser 10 mm, 10 N Auflagegewicht, 0,45mm dicker Stahldraht) auf (siehe Tabelle 1):

**Tabelle 1**

| Klebebandtyp | Abriebfestigkeit |
|---|---|
| PET-Gewebe (130 g/m²) mit Kautschukmasse | 500 bis 1.000 Hübe |
| PET-Nähvlies (80 g/m²) mit Kautschukmasse | 20 bis 100 Hübe |
| PVC-Folie 0,1 mm mit Kautschukmasse | 1 bis 50 Hübe |
| Twist Tube = PET-Geflechtschlauch (ohne Klebemasse) | 2000 bis 5.000 Hübe |

In erster Nährung kann davon ausgegangen werden, dass sich bei Verwendung eines Trägers aus mehreren Lagen Textilien die Abriebfestigkeiten aus den Einzelkomponenten addieren (siehe Tabelle 2).

**Tabelle 2**

| Aufbau des Trägerverbundes aus je 2 PET-Filamentgeweben (125 g/m²) und als Zwischenschicht C | Abriebfestigkeit (7 N Auflagegewicht) |
|---|---|
| Variante 1 ohne | 5.130 Hübe |
| Variante 2. 30 g/m² Kaschierkleber | 5.310 Hübe |

Für die Messung der Variante 1 werden zwei Lagen des oben beschriebenen PET-Filamentgewebes mechanisch auf der Abriebmessapparatur fixiert und ohne zusätzlichen Kaschierkleber vermessen. Die Verwendung des Kaschierklebers bei der Version 2 ergibt keine signifikante Erhöhung der Abriebfestigkeit gegenüber der kleberfreien Basisversion 1.

Der absolute Zugewinn an Abriebfestigkeit fällt überraschenderweise synergistisch und somit stärker als rein additiv aus, wenn zwischen den beiden Decklagen zusätzlich noch ein erfindungsgemäßer textiler Zwischenträger eingebaut ist.

**Tabelle 3**

| Klebebandtyp | Dicke | Abriebfestigkeit (7N Auflagegewicht) | Schalldämpfung |
|---|---|---|---|
| PET-Kunit, 300 g/m² | 1,3 mm | 1.500 Hübe | 15,5 dB (A) |
| PET-Kunit, 290 g/m² | | | |
| Verbund mit 80g Maliwatt | 1,6 mm | 4.700 Hübe | 27 dB (A) |

Während in der ersten Messung in Tabelle 3 nur die "Zwischenschicht" C, ein 300 g Kunit, getestet wurde, stand für die zweite Messung ein Verbund zur Verfügung, der durch Vermaschung des Kunit-Zwischenträgers auf einer Multiknit-Maschinen mit einem 80 g PET-Maliwatt als Grundware hergestellt wurde. Da die Deckschicht A, ein 80 g PET-Maliwatt, allein für sich nur eine Abriebfestigkeit von 300 Hüben aufweist, ist deutlich ersichtlich, dass eine mehr als additive Verbesserung des Abriebschutzes durch diese Art der Verbundbildung erreicht wird.

Aus den beispielhaften Trägerverbunden der Tabellen 2 bis 3 wird deutlich, dass bei entsprechendem erfindungsgemäßem Aufbau des Trägermaterials sich sehr hohe Abrieb- und Scheuerfestigkeiten erzielen lassen, so dass aus derartigen Trägern hergestellte Klebebänder eine attraktive Kombination von Bandagier- und Wickelband mit integriertem Abriebschutz und Klapperschutz bieten. Vordergründig bieten sich derartige Klebebänder für die spiralförmige und Längsummantelung von elektrischen Leitungen zu Kabelsätzen an, wenn diese dauerhaft in scheuer- und vibrationsgefährdeten Bereichen eingesetzt werden. Aufgrund ihrer exzellenten Abriebschutzwirkung und Geräuschdämpfung sind derartige Trägerverbunde jedoch generell als Schutzsysteme gegen schlagende, scheuernde und reibende Beanspruchungen geeignet. Eine klebende Ausrüstung zu einem Klebeband ist dabei nicht zwangsläufig notwendig, wenn die Positionierung an der zu schützenden Stelle anderweitig gelöst wird, beispielsweise in Form eines genähten oder gekletteten Schlauch um ein langgestrecktes, zu schützendes Gut.

Die nachfolgend beschriebenen Beispiele lassen den Fachmann erkennen, wie derartige Verbundträger herzustellen sind.

### Beispiel 1

Einem 250 g/m² schweren Kunitvliesstoff aus PET-Stapelfasern wird bei der Verarbeitung zum Multiknit ein offenes PA-Gewebe von 60 bis 70 g/m² zugeführt, dass bei dem Vermaschungsprozess von den Nadeln sicher durchstochen werden kann und so als Deckschicht mechanisch fest mit dem Multiknit als Zwischenschicht-verbunden wird. Der Verbundträger hat ein Dicke von 1 mm. Das Nylongewebe stellt die verschleißfeste Deckschicht dar, das PET-Multiknit die abriebschutzfördende Zwischenschicht. Der Trägerverbund weist eine Abriebfestigkeit nach ISO 6722 von weit über 20.000 Hüben bei einer Gewichtsbelastung von 7 N auf.
Auf der dem Nylongewebe abgewandten Seite des Trägerverbundes werden 140 g/m² einer schwarzen harzmodifizierten Naturkautschukklebemasse beschichtet, wie sie für den Einsatz in Kabelwickelbändern wie beispielsweise dem tesa ^{®} 51606 bekannt ist. Bei der Beschichtung ist durch ausreichend hohe Viskosität der gelösten Kautschukklebemasse, das Auftragsverfahren und schnelle Trocknung darauf zu achten, dass nur geringe Mengen der Klebemasse in die an sich saugfähige Multiknit-Zwischenlage wegschlagen kann.
Das Klebeband eignet sich aufgrund seiner sehr hohen Abrieb- und Scheuerfestigkeit als Wickelband für Kabelstränge in gefährdeten Bereichen. Bedingt durch die Multiknit-Zwischenlage weist das Klebeband zusätzliche exzellente Klapperschutzeigenschaften auf. Nach der Geräuschdämpfungsmessung gemäß BMW-Norm GS 95008-3 (Abschnitt 11) vom Mai 2000 werden Dämpfungswerte von 15 dB (A) und mehr erzielt.

### Beispiel 2

Ein 310 g/m² schweres Maliwatt-Vliesstoff (PET-Stapelfasern, Dicke 0,75 mm, Feinheit 28, Typus "Cross stitched-bonded fabric") der Firma Tietex Asia Ltd. und ein Gewebe von 100 g/m² (Schuss: 30 mesh, Kette: 45 mesh) werden kreuzweise übernäht (Fadengewicht 40 g/m²), so dass die Nadeln das Gewebe und Vlies durchstehen und Gewebe und Vlies mechanisch fest verbinden. Der Gesamtträgerverbund weist nach dem Übernähen eine Gesamtdicke von 0,9 mm auf.
Nach Kaschierung von 60 g/m² einer UV-vernetzten Acrylat-Hotmelt-Klebemasse, wie sie standardmäßig für Kabelsatzanwendungen eingesetzt wird, werden Abriebfestigkeiten nach ISO 6722 bei einer Gewichtsbelastung von 10 N von über 8.000 Doppelhüben gemessen.
Das Klebeband mit einem derartigen Trägeraufbau eignet sich aufgrund seiner sehr hohen Abriebfestigkeit als Schutzband für Kabelstränge in gefährdeten Bereichen. Mit einer Geräuschdämpfungswirkung von 11 dB (A) erfüllt es des Weiteren Klapperschutzanforderungen für Passagierraumanwendungen.

## Patentansprüche

1. Hoch abriebfestes und geräuschdämpfendes Band für die Bandagierung von Kabelbäumen aus einem Träger mit einer ersten Deckschicht A, die mit einer zweiten Schicht C über die gesamte Fläche der Deckschicht A fest verbunden ist, die Deckschicht A aus einem Gelege oder Gewebe besteht,
die Schicht C aus einem Textil mit einer offenen, aber stabilen dreidimensionalen Struktur besteht ,
wobei es sich bei der Schicht C um ein Abstandsgewirke, eine Schlingenware, ein dreidimensionales Vliesstoffgebilde aus Kunit, Multiknit oder Maliknit oder Caliweb® oder ein Kettengewirke handelt und die Schicht C ein Flächengewicht von 150 bis 500 g/m² aufweist.

2. Band nach Anspruch 1, **dadurch gekennzeichnet, dass**
die Schicht C auf der offenen Seite mit einer zweiten Deckschicht B über die gesamte Fläche der Deckschicht B fest verbunden ist.

3. Band nach den Ansprüchen 1 oder 2, **dadurch gekennzeichnet, dass**
die Deckschicht B aus einem Velours, Gelege, Gewebe oder Gewirke besteht.

4. Band nach zumindest einem der Ansprüche 1 bis 3, **dadurch gekennzeichnet, dass** die Abriebfestigkeit des Trägers (gemessen nach ISO 6722. Kapitel 9.3 "Scrape abrasion resistance") zumindest 150% der Summe der Abriebfestigkeiten der Einzellagen beträgt.

5. Band nach zumindest einem der Ansprüche 1 bis 4, **dadurch gekennzeichnet, dass** die Schicht C ein Flächengewicht von 150 bis 300 g/m² aufweist.

6. Band nach zumindest einem der Ansprüche 1 bis 5, **dadurch gekennzeichnet, dass** die Schicht C aufweist
ein Raumgewicht von 100 bis 600 g/dm³ und/oder
eine Dicke von 0,2 bis 3 mm.

7. Band nach zumindest einem der Ansprüche 1 bis 6, **dadurch gekennzeichnet, dass** der flächige Verbund aus den Deckschichten A und gegebenenfalls B und der Schicht C durch Verwendung eines Kaschierklebers oder kleberfrei durch mechanische Verbundbildung wie Vermaschen, Übernähen, Vernadeln, Wasserstrahlverfestigung erfolgt.

8. Band nach zumindest einem der Ansprüche 1 bis 7, **dadurch gekennzeichnet, dass** als Werkstoffe für die Schichten A, B und C verschleißfeste Polymere wie Polyester, Polyolefine, Polyamide oder Glas- oder Carbonfasern Verwendung finden.

9. Band nach zumindest einem der Ansprüche 1 bis 8, **dadurch gekennzeichnet, dass** der Träger zumindest einseitig mit einer Selbstklebemasse beschichtet wird, wobei die Selbstklebemasse eine Kautschuk- oder Acrylat- oder Silikonklebemasse sein kann.

10. Verwendung eines Bands nach zumindest einem der vorherigen Ansprüche zum Ummanteln von langgestrecktem Gut, wobei das Band in einer schraubenförmigen Spirale um das langgestreckte Gut geführt wird.

11. Verwendung eines Bands nach zumindest einem der vorherigen Ansprüche zum Ummanteln von langgestrecktem Gut, wobei das langgestreckte Gut in axialer Richtung von dem Band umhüllt wird.

12. Verwendung eines Bands nach den Ansprüchen 10 oder 11, wobei es sich bei dem langgesteckten Gut um einen Kabelsatz handelt.

13. Langgestrecktes Gut, ummantelt mit einem Band nach zumindest einem der vorherigen Ansprüche.

14. Kabelsatz, ummantelt mit einem Band nach zumindest einem der vorherigen Ansprüche.

15. Fahrzeug, enthaltend langgestrecktes Gut nach Anspruch 13 oder Kabelsatz nach Anspruch 14.

## Claims

1. Highly abrasion-resistant and noise-suppressing tape for bandaging cable harnesses comprising a backing with a first outer layer A, which is firmly connected to a second layer C over the entire area of outer layer A,
the outer layer A is composed of a scrim or woven fabric,
the layer C is composed of a textile having an open but stable three-dimensional structure, layer C being a spacer knit, a loop product, a three-dimensional nonwoven structure comprising Kunit, Multiknit or Maliknit or Caliweb^{®} or a warp knit and the layer C having a basis weight of 150 to 500 g/m².

2. Tape according to Claim 1, **characterized in that** the layer C is firmly connected on the open side to a second outer layer B over the entire area of outer layer B.

3. Tape according to Claims 1 or 2, **characterized in that** the outer layer B is composed of a velour, scrim, woven fabric or formed-loop knit.

4. Tape according to at least one of Claims 1 to 3, **characterized in that** the abrasion resistance of the backing (measured in accordance with ISO 6722, section 9.3, "Scrape abrasion resistance") is at least 150% of the sum of the abrasion resistances of the individual plies.

5. Tape according to at least one of Claims 1 to 4, **characterized in that** the layer C has a basis weight of 150 to 300 g/m².

6. Tape according to at least one of Claims 1 to 5, **characterized in that** the layer C has
a density of 100 to 600 g/dm³ and/or
a thickness of 0.2 to 3 mm.

7. Tape according to at least one of Claims 1 to 6, **characterized in that** the sheetlike assembly of the outer layers A, and optionally B and the layer C is accomplished by using a laminating adhesive or, without adhesive, by mechanical assembly formation such as interlooping, overstitching, needling, water jet consolidation.

8. Tape according to at least one of Claims 1 to 7, **characterized in that** materials used for layers A, B, and C are wear-resistant polymers such as polyesters, polyolefins, polyamides or glass fibres or carbon fibres.

9. Tape according to at least one of Claims 1 to 8, **characterized in that** the backing is coated at least on one side with a self-adhesive compound, the self-adhesive compound being able to be a rubber or acrylate or silicone adhesive.

10. Use of a tape according to at least one of the preceding claims for wrapping elongate product, the tape being guided in a helical spiral around the elongate product.

11. Use of a tape according to at least one of the preceding claims for wrapping elongate product, the elongate product being sheathed by the tape in its axial direction.

12. Use of a tape according to Claims 10 or 11, the elongate product being a cable loom.

13. Elongate product wrapped with a tape according to at least one of the preceding claims.

14. Cable loom wrapped with a tape according to at least one of the preceding claims.

15. Vehicle comprising elongate product according to Claim 13 or cable loom according to Claim 14.

## Revendications

1. Ruban très résistant à l'abrasion et acoustiquement isolant pour envelopper des tresses de câbles, constitué d'un support doté d'une première couche de recouvrement A reliée solidairement à une deuxième couche C sur toute la surface de la couche de recouvrement A, la couche de recouvrement A étant constituée d'un enduit ou d'un tissu,
la couche C étant constituée d'un textile à structure tridimensionnelle ouverte mais stable,
la couche C étant un tricot d'écartement, un produit à mailles, un feutre tridimensionnel Kunit, Multiknit, Maliknit ou Callweb^{®} ou un tricot à chaîne et la couche C ayant un poids par unité de surface de 150 à 500 g/m².

2. Ruban selon la revendication 1, **caractérisé en ce que** la couche C est reliée solidairement sur son côté ouvert à une deuxième couche de recouvrement B sur toute la surface de la couche de recouvrement B.

3. Ruban selon les revendications 1 ou 2, **caractérisé en ce que** la couche de recouvrement est constituée d'un velours, d'un enduit, d'un tissu ou d'un tricot.

4. Ruban selon au moins l'une des revendications 1 à 3, **caractérisé en ce que** la résistance à l'abrasion du support (mesurée selon la norme ISO 6722, chapitre 9.3, "Scrape abrasion résistance" - résistance à l'abrasion par grattage) représente au moins 150 % de la somme des résistances à l'abrasion des différentes couches.

5. Ruban selon au moins l'une des revendications 1 à 4, **caractérisé en ce que** la couche C présente un poids par unité de surface de 150 à 300 g/m².

6. Ruban selon au moins l'une des revendications 1 à 5, **caractérisé en ce que** la couche C présente une masse spécifique de 100 à 600 g/dm³ et/ou une épaisseur de 0,2 à 3 mm.

7. Ruban selon au moins l'une des revendications 1 à 6, **caractérisé en ce que** le composite plat constitué des couches de recouvrement A et éventuellement B et de la couche C est réalisé en recourant à un adhésif de contre-collage ou sans adhésif par formation mécanique d'un composite, par exemple par maillage, sur-couture, aiguillettage ou solidification au jet d'eau.

8. Ruban selon au moins l'une des revendications 1 à 7, **caractérisé en ce que** comme matériau pour les couches A, B et C, on utilise des polymères résistant à l'usure tels que les polyesters, les polyoléfines, les polyamides ou les fibres de verre ou de carbone.

9. Ruban selon au moins l'une des revendications 1 à 8, **caractérisé en ce que** le support est revêtu au moins sur une face par une pâte adhésive, la pâte adhésive pouvant être une pâte adhésive au caoutchouc, à l'acrylate ou au silicone.

10. Utilisation d'un ruban selon au moins l'une des revendications précédentes pour envelopper des produits allongés, le ruban étant posé en spirale hélicoïdale sur le produit allongé.

11. Utilisation d'un ruban selon au moins l'une des revendications précédentes pour envelopper un produit allongé, le produit allongé étant enveloppé par le ruban dans sa direction axiale.

12. Utilisation d'un ruban selon les revendications 10 ou 11, dans laquelle le produit allongé est un ensemble de câbles.

13. Produit allongé enveloppé à l'aide d'un ruban selon au moins l'une des revendications précédentes.

14. Jeu de câbles enveloppé dans un ruban selon au moins l'une des revendications précédentes.

15. Véhicule qui contient un produit allongé selon la revendication 13 ou un jeu de câbles selon la revendication 14.
